**Europäisches Patentamt**

**European Patent Office**

**Office européen des brevets**

(11) Veröffentlichungsnummer: **0 297 579**

**A2**

## (12) EUROPÄISCHE PATENTANMELDUNG

(21) Anmeldenummer: **88110479.8**

(51) Int. Cl.⁴: **B62M 1/04**

(22) Anmeldetag: **30.06.88**

(30) Priorität: **02.07.87 DE 3721927**

(43) Veröffentlichungstag der Anmeldung:
**04.01.89 Patentblatt 89/01**

(84) Benannte Vertragsstaaten:
**AT BE CH DE ES FR GB GR IT LI LU NL SE**

(71) Anmelder: **Felkel, Georg**
**Sommerweg 5**
**D-7951 Berkheim(DE)**

(72) Erfinder: **Felkel, Georg**
**Sommerweg 5**
**D-7951 Berkheim(DE)**

(74) Vertreter: **Klingseisen, Franz, Dipl.-Ing. et al**
**Dr. F. Zumstein Dipl.-Ing. F. Klingseisen**
**Bräuhausstrasse 4**
**D-8000 München 2(DE)**

(54) Antriebsvorrichtung für ein durch Muskelkraft angetriebenes Fahrzeug.

(57) Bei einer Antriebsvorrichtung für ein durch Muskelkraft angetriebenes Fahrzeug mit wenigstens einem hin und her verschwenkbaren Trethebel, an dem ein Seil oder eine Kette befestigt ist, die über ein Antriebsrad geführt und unter Spannung gehalten ist, wird zur Erzielung eines großen Übersetzungsbereiches und einer leichten Umsetzung auch einer hohen Übersetzung eine flaschenzugartige Umlenkung des Seils bzw. der Kette zwischen einem Verstellteil (4), das längs des Trethebels (8) verschiebbar ist, und dem Fahrzeugrahmen bzw. einem Festpunkt (7) vorgesehen.

**Fig.1**

EP 0 297 579 A2

## Antriebsvorrichtung für ein durch Muskelkraft angetriebenes Fahrzeug

Die Erfindung betrifft eine Antriebsvorrichtung nach dem Oberbegriff des Anspruchs 1.

Eine derartige Antriebsvorrichtung ist aus der DE-AS 1 037 300 bekannt, wobei durch das längs des Trethebels verschiebbare Verstellteil mit dem darauf gelagerten Umlenkrad der Kraftangriffspunkt der am Trethebel befestigten Kette verstellt wird.

Der Erfindung liegt die Aufgabe zugrunde, eine Antriebsvorrichtung der eingangs angegebenen Art so auszubilden, daß man einen großen Übersetzungsbereich erhält und auch eine hohe Übersetzung leicht durch Muskelkraft in Fahrleistung umgesetzt werden kann.

Diese Aufgabe wird nach der Erfindung durch die Merkmale im Kennzeichen des Anspruchs 1 gelöst. Durch die Zwischenschaltung einer flaschenzugartigen Umlenkung der Kette oder des Seils zwischen Verstellteil und Fahrzeugrahmen ist ein großer Übersetzungsbereich erzielbar, wobei eine hohe Übersetzung dennoch durch Muskelkraft leicht in Fahrbewegung umgesetzt werden kann.

Vorteilhafte Ausgestaltungen der Erfindung sind in der nachfolgenden Beschreibung und in den weiteren Ansprüchen angegeben.

Beispielsweise Ausführungsformen der Erfindung werden nachfolgende anhand der Zeichnung näher erläutert. Es zeigen:

Fig. 1 in einer schematischen Seitenansicht eine Antriebsvorrichtung in einem Kabinenfahrrad mit einer Sitzposition des Fahrers, in der die Beine etwa horizontal liegen,

Fig. 2 in einer entsprechenden Seitenansicht eine abgewandelte Ausführungsform der Antriebsvorrichtung,

Fig. 3 in einer perspektivischen Darstellung eine vereinfachte weitere Ausführungsform, und

Fig. 4 in schmatischer Darstellung die Geometrie der Anordnung des Flaschenzugs relativ zur Anlenkstelle des Trethebels ohne Darstellung der Seilenden.

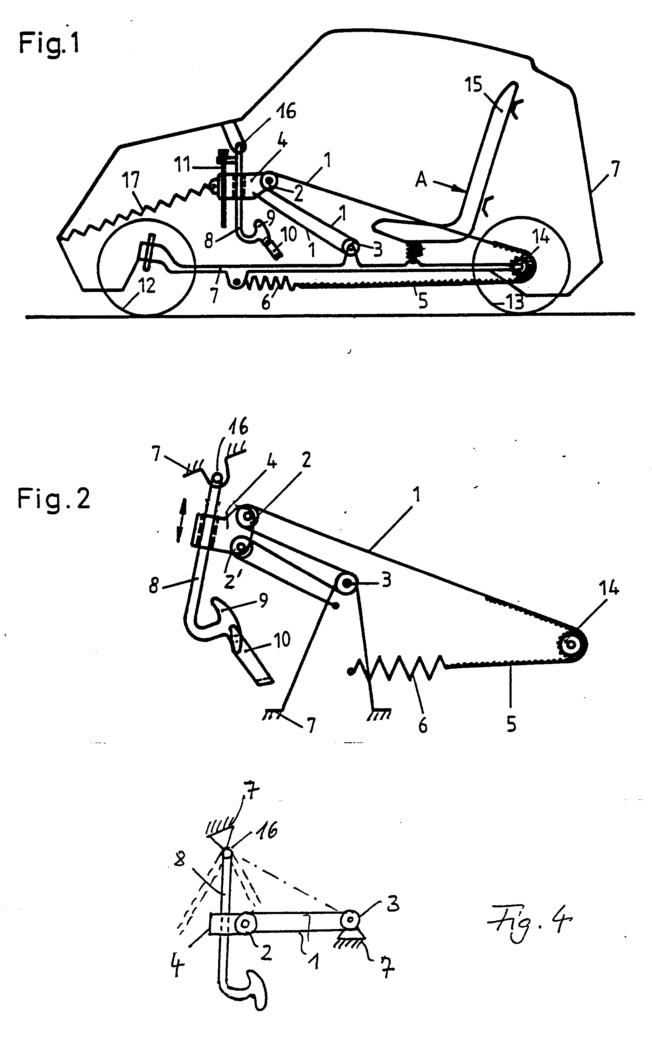

In Fig. 1 ist mit 1 ein Zugmittel, wie beispielsweise ein Seil, ein Band oder eine Kette bezeichnet, das mit einem Ende an einem Verstellteil 4 befestigt ist. Das Seil ist um eine am Fahrzeugrahmen 7 drehbar gelagerte Rolle 3 geführt, danach um eine an dem Verstellteil 4 drehbar gelagerte Rolle 2, von der aus das Seil zu einem Antriebszahnrad 14 auf einer Antriebswelle führt. Im Eingriffsbereich mit dem Zahnrad 14 ist das Seil mit einem Zahnriemen 5 verbunden, dessen freies Ende durch eine Zugfeder 6 am Fahrzeugrahmen 7 befestigt ist. Das Verstellteil 4 ist auf einem Trethebel 8 angebracht und längs dieses Trethebels 8 verstellbar. Der Trethebel 8 ist am oberen Ende bei 16 am Fahrzeugrahmen 7 angelenkt und am unteren Ende mit einem Pedal 9 versehen, an dem zum Abstützen der Ferse ein Bügel 10 angebracht ist. Der nicht dargestellte Fahrer sitzt in einem Sitz mit Rückenlehne 15, die am Fahrzeugrahmen 7 abgestützt ist, wobei die Beine etwa horizontal liegen und sich der Fahrer in Richtung des Pfeiles A mit dem Rücken gegenüber dem Trethebel 8 bzw. Pedal 9 abstützt.

Zum stufenlosen Verstellen des Übersetzungsverhaltnisses kann das Verstellteil 4 längs des Trethebels 8 verschoben und in der jeweiligen Stellung festgelegt werden, wobei bei 11 eine Gewindespindel zum Verschieben des Verstellteils 4 angedeutet ist. Das Verstellteil 4 kann z.B. auch durch einen Seilzug oder eine Rasteneinrichtung und dergleichen verstellt und in der jeweiligen Stellung festgelegt werden.

Die Umlenkung des Seils 1 über die Rollen 2 und 3 ergibt einen Flaschenzug mit einem vorgegebenen Übersetzungsverhältnis von 1 : 3 bei dem in Fig. 1 dargestellten Ausführungsbeispiel. Eine weitere Übersetzung ergibt sich durch den Hebel zwischen Anlenkstelle 16 des Trethebels 8 und Verstellteil 4, wobei diese Übersetzung stufenlos verstellbar ist durch Verschieben des Verstellelementes 4 längs des Trethebels 8. Auf diese Weise ist ein großer Übersetzungsbereich möglich, wobei auch sehr hohe Übersetzungen je nach Auslegung des Flaschenzugs durch diesen noch leicht mittels Muskelkraft in eine Drehbewegung des Antriebszahnrads 14 umgesetzt werden können.

Zusätzlich zu den beiden Übersetzungen Flaschenzug und Hebelarm am Trethebel ergibt sich bei der Schwenkbewegung des Trethebels 8 um die Anlenkstelle 16 eine Veränderung der Übersetzung dadurch, daß sich während der Schwenkbewegung des Trethebels 8 der wirksame Hebelarm zwischen Verstellteil 4 und Anlenkstelle 16 in geringem Umfang ändert. So ist in der Ausgangsstellung des Trethebels in der rechten Endstellung der Schwenkbewegung der wirksame Hebelarm zwischen Verstellteil 4 und Anlenkstelle 16 kürzer als in der in Fig. 1 dargestellten Trethebelstellung, die etwa in der Mitte des Schwenkbereiches liegt. Wie Fig. 4 zeigt, wird der Flaschenzug vorzugsweise so angeordnet, daß die Linie zwischen den Rollen 2 und 3 des Flaschenzugs, die Verbindungslinie zwischen der Rolle 2 und der Anlenkstelle 16 sowie die Verbindungslinie zwischen der Anlenkstelle 16 und der Rolle 3 ein Dreieck bilden. Wenn der Trethebel 8 in dem durch gestrichelte Linien angedeuteten Schwenkbereich verschwenkt wird, ist die Hebelwirkung in der in Fig. 4 dargestellten Stellung am größten, in der die Verbindungslinie zwischen den Rollen 2 und 3 rechtwinklig zum Trethebel 8 bzw. zur Verbindungslinie der Rolle 2 mit der Anlenkstelle 16 ist. In dem rechts und links davon liegenden Schwenkbereich wird der wirksame Hebelarm etwas verkürzt. Damit wird bei vorgegebener Übersetzung durch den Abstand des Verstellteils 4 von der Anlenkstelle 16 die Wirksamkeit über den Schwenkbereich des Trethebels 8 in der Weise verändert, daß ausgehend von einer etwas geringeren Übersetzung diese ansteigt bis auf den Maximalwert und danach wieder absinkt, wenn der Schwenkbereich des Trethebels 8 über die in Fig. 4 dargestellte senkrecht Lage nach rechts und links hinausreicht. Diese Änderung der Übersetzung liegt im Kuppenbereich einer Sinuslinie, wobei die Amplitude der Sinuslinie abhangt von der Einstellung des Verstellteils 4 relativ zur Anlenkstelle 16.

Auf diese Weise ist es möglich, das Verstellteil 4 soweit nach oben in die Nähe der Anlenkstelle 16 zu verschieben, daß bei der nach oben versetzten Anordnung des Flaschenzugs am Verstellteil 4, wie in Fig. 2 dargestellt, zunächst bei Beginn der Tretbewegung eine Übersetzung von 0 vorhanden ist, während im Verlauf der Schwenkbewegung des Trethebels 8, z.B. gegen Ende der Schwenkbewegung, ein, wenn auch nur geringer, Hebelarm am Trethebel 8 zur Wirkung kommt, so daß die Übersetzung des Flaschenzugs einschließlich des Hebelarms zur Wirkung kommt. Damit kann bei einer einzelnen Schwenkbewegung des Trethebels 8 die Übersetzung von 0 bis zu 1 : 7 beispielsweise verändert werden, wenn der Flaschenzug eine Grundübersetzung von 1 : 5 hat.

Vorzugsweise ist der Abstand zwischen Anlenkstelle 16 und Festpunkt des Flaschenzugs an der Rolle 3 wenigstens gleich der Länge des Verstellbereichs des Verstellteils 4 am Trethebel 8. Bei einer kurzeren Auslegung des Abstands zwischen 16 und 3 ergibt sich wieder eine Reduzierung der größtmöglichen Übersetzung.

Die Veränderung des wirksamen Hebelarms im Verschwenkbereich des Trethebels 8 kann an die Beinstellung angepaßt werden, so daß bei angewinkeltem Bein die wirksame Übersetzung im niedrigen Bereich liegt und mit fortschreitender Streckung des Beins ansteigt, bis der Maximalwert bei rechtwinkliger Lage der Verbindungslinien 2-16 und 2-3 zueinander bei nahezu gestrecktem Bein erreicht wird.

Bei einer praktischen Ausgestaltung sind zwei nebeneinanderliegende Trethebel 8 vorgesehen, die jeweils über ein Seil 1 bzw. eine Kette 5 ein Antriebszahnrad 14 antreiben. Die Antriebszahnräder 14 sind über einen Freilauf 20 mit der Antriebswelle verbunden, so daß durch die von der Feder 6 erzeugte Rückzugbewegung des Seils I bzw. der Kette 5 das Antriebszahnrad 14 leer auf der Antriebswelle umläuft.

Bei dem in Fig. I dargestellten Kabinenfahrrad sind an den beiden Enden der Antriebswelle Räder 13 befestigt. Die Vorderräder 12 sind durch eine nicht dargestellte Lenkung steuerbar.

Fig. 2 zeigt einen Flaschenzug mit zwei Rollen 2,2' an dem Verstellteil 4, wobei das vordere Ende des Zugseils 1 am Fahrzeugrahmen 7 befestigt ist. Durch die Ausnehmung auf der Oberseite des Verstellteils 4 kann dieses so weit nach oben verstellt werden, daß die obere Rolle 2 auf der Höhe oder über der Anlenkstelle 16 des Trethebels 8 liegt. Hierdurch kann die Übersetzung auf Null eingestellt werden.

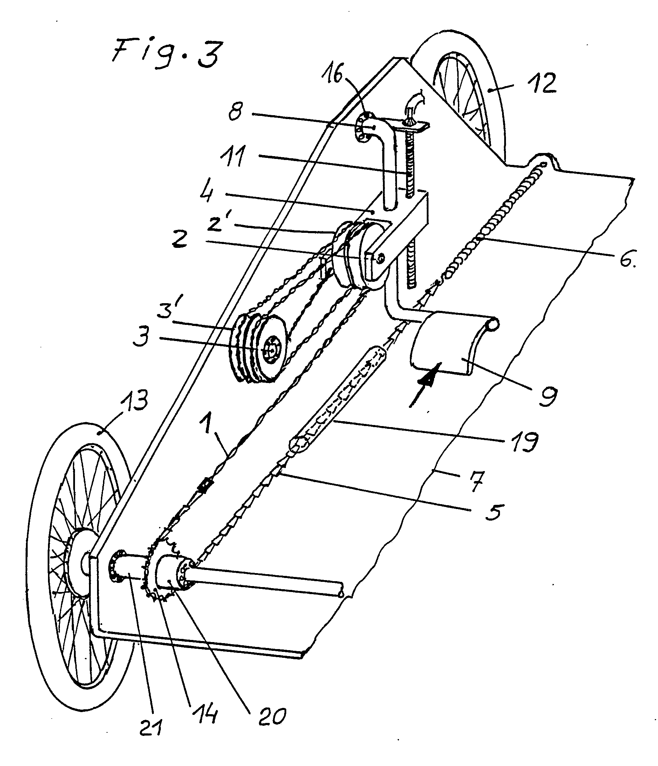

Bei einer praktischen Ausführungsform werden die Rollen 2,2' auf einer Achse nebeneinander angeordnet, wie dies Fig. 3 zeigt. Bei dieser Ausführungsform sind bei 3 ebenfalls zwei auf einer Achse liegende Rollen vorgesehen, wobei das Ende des Zugseils 1 am Verstellteil 4 befestigt ist. Bei der Anordnung nach Fig. 3 ergibt sich eine Grundübersetzung am Flaschenzug von 1 : 5. Der Trethebel 8 ist bei der Ausfuhrungsform nach Fig. 3 an beiden Enden gekröpft ausgebildet. Bei 19 ist ein Führungsrohr angedeutet, das zur Fuhrung des Eingriffsabschnitts bzw. des Zahnriemens bzw. der Kette 5 dient. Zum Erzielen einer Differentialwirkung kann bei 21 ein weiterer Freilauf vorgesehen sein.

Es sind verschiedene Ausgestaltungen der beschriebenen Bauweise möglich. So kann beispielsweise der Trethebel 8 mit einer Stange verbunden sein, auf der das Verstellteil 4 verschiebbar und feststellbar angeordnet ist. Der Trethebel 8 kann am unteren oder oberen Ende am Fahrzeugrahmen 7 angelenkt und gegebenenfalls auch gekrümmt statt gerade ausgebildet sein.

Bei 17 ist in Fig. 1 eine Zugfeder zwischen Fahrzeugrahmen 7 und Trethebel 8 bzw. Verstellteil 4 angedeutet, welche die Wirkung der Zugfeder 6 kompensiert bzw. die Zugseilanordnung in einem ausgeglichenen Zustand hält. Anstelle der Zugfeder 6 kann eine andere Anordnung vorgesehen werden, mittels der das Zugseil 1 unter Spannung gehalten wird, wobei die erforderliche Bewegung des Zugseils möglich ist. Beispielsweise kann bei einer. Befestigung des Zugseils oder des Zahnriemens 5 direkt am Fahrzeugrahmen 7 ohne Zwischenschaltung der Feder 6 eine federbeaufschlagte Rolle gegen das Zugseil drücken, die bei der Zugbewegung des Zugseils 1 gegen die Federkraft verschwenkt wird, so daß bei der Schwenkbewegung des Trethebels 8 die erforderliche Länge des Zugseils 1 zur Verfügung gestellt wird. Auch ist es möglich, das mit der Feder 6 verbundene Ende des Zugseils 1 bzw. des Eingriffsabschnitts 5 am Trethebel 8 bzw. am Verstellteil 4 zu befestigen, so daß sich eine endlose Anordnung des Zugseils 1 ergibt.

## Ansprüche

1. Antriebsvorrichtung für ein durch Muskelkraft angetriebenes Fahrzeug, mit wenigstens einem hin und her verschwenkbaren Trethebel, längs dem ein Verstellteil verschiebbar ist, auf dem ein Umlenkrad drehbar gelagert ist, uber das ein Abschnitt einer Kette oder eines Seils verlauft, das über ein Antriebsrad geführt ist, wobei das Seil unter Spannung gehalten wird,
**dadurch gekennzeichnet,**
daß eine flaschenzugartige Umlenkung der Kette oder des Seils (1) zwischen dem Verstellteil (4) und dem Fahrzeugrahmen bzw. einem Festpunkt (7) vorgesehen ist.

2. Antriebsvorrichtung nach Anspruch 1,
dadurch gekennzeichnet,
daß bei Anordnung von zwei und mehr Umlenkrollen am Verstellteil (4) und/oder am Fahrzeugrahmen (7) diese jeweils auf einer Achse angeordnet sind.

3. Antriebsvorrichtung nach den Ansprüchen 1 und 2,
dadurch gekennzeichnet,
daß die Verbindungslinien zwischen Anlenkstelle (16) des Trethebels (8), Festpunkt (3) des Flaschenzugs, Anlenkstelle (2) des Flaschenzugs am Verstellteil (4) und Anlenkstelle (16) ein Dreieck bilden, wobei in einer Trethebelstellung die beiden letzteren Verbindungslinien rechtwinklig zueinander liegen.

4. Antriebsvorrichtung nach den Anspruchen 1 bis 3,
dadurch gekennzeichnet,
daß der Abstand zwischen den Rollen (2,3) des Flaschenzugs wenigstens gleich der Länge des Verstellbereichs des Verstellteils (4) am Trethebel (8) ist.

Fig.1

Fig.2

Fig.4

Fig. 3